# EUROPÄISCHE PATENTSCHRIFT

(11) **EP 1 518 901 B1**
(45) Veröffentlichungstag und Bekanntmachung des Hinweises auf die Patenterteilung: **18.05.2016**
(21) Anmeldenummer: 04102259.1
(22) Anmeldetag: 24.05.2004
(51) Int. Cl.: C08L 77/00, C08L 77/06, C08L 23/08, C08L 53/00, C08L 33/06, C08L 35/02

(54) **Formmasse auf Basis von Polyetheramiden**
Mouldings based on Polyetheramines
Moulages à partir de polyétheramines

(30) Priorität: 18.07.2003 DE 10333005
(43) Veröffentlichungstag der Anmeldung: 30.03.2005
(73) Patentinhaber: Evonik Degussa GmbH, 45128 Essen (DE)
(72) Erfinder: Baumann, Franz-Erich, 48249, Dülmen (DE); Bartz, Wilfried, 45770, Marl (DE); Himmelmann, Martin, 45721, Haltern am See (DE); Farges, Olivier, 45768, Marl (DE)

(56) Entgegenhaltungen:
- EP-A- 0 459 862
- EP-A2- 1 329 481
- CH-A- 655 941
- US-A- 5 869 414
- US-A1- 2002 026 009

## Beschreibung

Gegenstand der Anmeldung ist die Verwendung von Polyetheramidformmassen mit hervorragender Wärmeform- und Hydrolysebeständigkeit, die sich zur Extrusion flexibler Rohre sowie für die Herstellung blasgeformter flexibler Artikel eignen, zur Herstellung spezifischer Formteile.

Weichgemachte teilkristalline Polyamidformmassen, insbesondere auf der Basis von PA11 oder PA12, werden seit langem zu Rohren für die Verwendung im Automobilbau extrudiert, da sie hervorragende mechanische und chemische Beständigkeit aufweisen. Bei den in neuerer Zeit zunehmend geforderten hohen Einsatztemperaturen unter der Motorhaube zeigen derartige Formteile jedoch wegen der Flüchtigkeit der verwendeten externen Weichmacher nach kurzer Einsatzdauer Versteifung; daneben neigen sie bei Druckbelastung unter den neuerdings geforderten erhöhten Einsatztemperaturen von 110 bis 150 °C zur irreversiblen Deformation. Zwar können diese Nachteile durch Einsatz von Formmassen auf Basis höherschmelzender Polyetheresteramide, wie sie beispielsweise in der EP-A-0 095 893 beschrieben sind, vermieden werden, jedoch eignet sich diese Polyamid-Elastomerklasse nicht zur Herstellung brauchbarer Rohre für die vorgenannten Einsatzzwecke, da entsprechende Formmassen bei der ebenfalls für diesen Anwendungszweck geforderten Hydrolysebeständigkeit bei weitem nicht die Beständigkeit klassischer Polyamidformmassen aufweisen und bereits nach wenigen Wochen versagen.

In der nicht vorveröffentlichten EP 1 329 481 A2 wird eine Formmasse beschrieben, die 99,9 bis 95 Gewichtsteile eines Polyetheramids auf Basis eines Diamins, einer Dicarbonsäure und eines Polyetherdiamins sowie 0,1 bis 5 Gewichtsteile eines Copolymeren mit Säureanhydrid- oder Epoxidgruppen enthält. Die EP 0 459 862 A1 beschreibt eine Zusammensetzung aus einem Polyetheramid oder einem Polyestheramid sowie einem modifizierten Polyolefin, das in der Zusammensetzung zu weniger als 50 Gewichtsprozent vorliegt.

Die Aufgabe bestand darin, hydrolysebeständige Formmassen mit hoher Wärmeformbeständigkeit herzustellen, die eine hohe Schmelzeviskosität aufweisen und sich daher gut extrudieren bzw. blasformen lassen. Die daraus hergestellten Formteile sollten ohne Verwendung externer Weichmacher eine ausreichende, dauerhafte Flexibilität sowie zusätzlich eine sehr gute Tieftemperaturschlagzähigkeit aufweisen.

Diese Aufgabe wurde durch die Verwendung einer Formmasse zur Herstellung eines Formteils gemäß Anspruch 1 gelöst, wobei die Formmasse folgende Komponenten enthält:
I. Weniger als 95 bis 80 Gew.-Teile, bevorzugt weniger als 95 bis 85 Gew.-Teile, eines Polyetheramids auf Basis eines linearen aliphatischen Diamins mit 6 bis 14 C-Atomen, einer linearen aliphatischen oder aromatischen Dicarbonsäure mit 6 bis 14 C-Atomen und eines Polyetherdiamins mit wenigstens 3 C-Atomen pro Ethersauerstoff und primären Aminogruppen an den Kettenenden,
II. mehr als 5 bis 20 Gew.-Teile und bevorzugt mehr als 5 bis 15 Gew.-Teile eines funktionelle Gruppen enthaltenden Kautschuks,
   wobei die Summe der Gew.-Teile von I. und II. 100 ergibt,
III. 0 bis 50 Gew.-%, bevorzugt 0,1 bis 30 Gew.-% und besonders bevorzugt 1 bis 20 Gew.-%, bezogen auf die Formmasse, an weiteren Polymeren sowie
IV. 0 bis 10 Gew.-%, bezogen auf die Formmasse, an üblichen Zusatzstoffen.

Polyetheramide sind prinzipiell z. B. aus der DE-OS 30 06 961 bekannt; die dort näher beschriebenen Polyetheramide auf der Basis von Caprolactam oder Laurinlactam kommen jedoch als Komponente I nicht infrage, da sie einerseits zu niedrige Schmelztemperaturen, andererseits zu niedrige Schmelzeviskositäten aufweisen.

Die erfindungsgemäß als Komponente I einzusetzenden Polyetheramide besitzen eine Schmelztemperatur Tₘ nach ISO 11357 von mindestens 175 °C, eine relative Lösungsviskosität ηᵣₑₗ von mindestens 1,80 und bevorzugt mindestens 1,85, gemessen in einer 0,5 gew.-%igen Lösung in m-Kresol bei 23 °C gemäß ISO 307, sowie eine Ruhe-Scherviskosität bei 220 °C von mindestens 500 Pas und bevorzugt mindestens 800 Pas, gemessen in einem mechanischen Spektrometer (Kegel-Platte) nach ASTM D 4440. Die daraus hergestellte erfindungsgemäße Formmasse sollte nach Möglichkeit in der Ruhe-Scherviskosität, auf die gleiche Weise nach ASTM D 4440 gemessen, über 2000 Pas und insbesondere über 5000 Pas bei 220 °C liegen, da sonst eine stabile maßhaltige Extrusion zu den gewünschten Rohren oder anderen Formteilen nicht oder nur in einem für eine wirtschaftliche Fertigung zu engen Temperaturfenster möglich ist.

Die Einarbeitung des Kautschuks der Komponente II führt dann ohne Probleme zum erwünschten zusätzlichen Schmelzeviskositätsaufbau, wenn die vorstehend genannten Schmelze- oder Lösungsviskositäten der Polyetheramide erreicht oder überschritten werden.

Bei der Herstellung des Polyetheramids werden als Diamin beispielsweise 1.6-Hexamethylendiamin, 1.8-Octamethylendiamin, 1.9-Nonamethylendiamin, 1.10-Decamethylendiamin und 1.12-Dodecamethylendiamin eingesetzt. Als Dicarbonsäure setzt man beispielsweise Adipinsäure, Korksäure, Azelainsäure, Sebacinsäure, 1.12-Dodecandisäure, 1.14-Tetradecandisäure, Terephthalsäure oder 2.6-Naphthalindicarbonsäure ein. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN^{®} D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet. Generell ist wünschenswert, dass bei den einzusetzenden Polyetherdiaminen ein Difunktionalitätsgrad, ausgedrückt durch den molaren Anteil acetylierbarer Amino- und Hydroxylendgruppen, von mindestens 95 % und bevorzugt von mindestens 98 % vorliegt; dabei ist ein z. B. acidimetrisch bestimmbarer Diamingehalt von mindestens 90 % und bevorzugt mindestens 95 % erwünscht. Die weitere Forderung nach einer annähernden Äquivalenz der eingesetzten Dicarbonsäure mit der Summe aus Diamin und Polyetherdiamin ist angesichts der notwendigerweise zu erreichenden hohen Molmassen trivial; in der Praxis arbeitet man mit Amino : Carboxyl-Molverhältnissen von 0,98 : 1 bis 1,02 : 1.

Im Hinblick auf den gewünschten Molekulargewichtsaufbau müssen Nebenreaktionen, die die Endgruppen schädigen oder die Ketten spalten, weitestgehend unterdrückt werden. Der Temperaturbereich für die Schmelzepolykondensation ist daher in der Praxis auf 220 bis etwa 245 °C eingeschränkt, wobei die Untergrenze aus den Schmelztemperaturen der zugrundeliegenden Polyamide und die Obergrenze aus der beginnenden thermischen Zersetzung der Polyetherdiamine resultiert.

Für eine eventuell durchzuführende Festphasen-Nachkondensation müssen überraschend drastische Bedingungen gewählt werden: Während für aliphatische Polyamide wie PA612, PA1010, PA1012 oder PA1212 erfahrungsgemäß Temperaturen von 155 bis 165 °C ausreichen, sind für die davon abgeleiteten erfindungsgemäß eingesetzten Polyetheramide Nachkondensationstemperaturen von 165 bis 185 °C erforderlich. Die Festphasennachkondensations-Temperatur sollte zur Vermeidung von Zusammenbackungen nicht höher als 10 K unterhalb des Kristallitschmelzpunktes Tₘ liegen. Es versteht sich für den Fachmann von selbst, dass entweder im Hochvakuum oder unter einem Inertgasstrom nachkondensiert wird. Ein möglicher Grund für die geringere Nachkondensationsaktivität der Polyetheramide kann in einer gegenüber üblichen, von aliphatischen Diaminen herrührenden Aminoendgruppen geringeren Reaktivität ihrer teilweise sterisch gehinderten Aminoendgruppen liegen.

Beim resultierenden Polyetheramid liegen bevorzugt mindestens 30 % der Endgruppen, besonders bevorzugt mindestens 50 % der Endgruppen und insbesondere mindestens 60 % der Endgruppen als Aminoendgruppen vor.

Der erfindungsgemäß verwendete Kautschuk ist beispielsweise ein Copolymeres ausgewählt aus der Gruppe
- Säureanhydridgruppen enthaltende Ethylen-α-Olefin-Copolymere,
- Säureanhydridgruppen enthaltende Styrol-Ethylen/Butylen-Blockcopolymere,
- Ethylen-Glycidyl(meth)acrylat-Copolymere,
- Ethylen-(Meth)acrylsäureester-Glycidyl(meth)acrylat-Terpolymere und/oder
- Ethylen-(Meth)acrylsäureester-α,β-ungesättiges Carbonsäureanhydrid-Terpolymere.

Das Säureanhydridgruppen enthaltende Ethylen-α-Olefin-Copolymer wird auf bekannte Weise durch radikalische Umsetzung eines Ethylen-α-Olefin-Copolymers mit einem α,β-ungesättigten Dicarbonsäureanhydrid oder einer Vorstufe hiervon wie z. B. Maleinsäureanhydrid, Maleinsäuremonobutylester, Maleinsäure, Fumarsäure, Aconitsäure, Itaconsäure oder Itaconsäureanhydrid hergestellt. Das Ethylen-α-Olefin-Copolymer kann beispielsweise ein Ethylen/C₃- bis C₁₂-α-Olefin-Copolymer mit 20 bis 96 und bevorzugt 25 bis 85 Gew.-% Ethylen sein oder ein Ethylen/C₃- bis C12-α-Olefin/unkonjugiertes Dien-Terpolymer mit 20 bis 96 und bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien oder 5-Ethylidennorbornen. Als C₃- bis C₁₂-α-Olefin sind beispielsweise Propen, 1-Buten, 1-Penten, 1-Hexen, 1-Octen, 1-Decen oder 1-Dodecen geeignet. Typische Beispiele sind Ethylen-Propylen-Kautschuk (EPM), Ethylen-Propylen-Dien-Kautschuk (EPDM), Ethylen-Butylen-Kautschuk, LLDPE (Linear Low Density Polyethylene) und VLDPE (Very Low Density Polyethylene). Das Copolymer enthält in der Regel 0,5 bis 6, bevorzugt 1 bis 5 und besonders bevorzugt 2 bis 4 Gew.-% an Einheiten, die vom α,β-ungesättigten Dicarbonsäureanhydrid herrühren.

Als Styrol-Ethylen/Butylen-Blockcopolymere werden vorzugsweise Styrol-Ethylen/Butylen-Styrol-Blockcopolymere (SEBS) eingesetzt, die durch Hydrierung von Styrol-Butadien-Styrol-Blockcopolymeren erhältlich sind. Es können aber auch Diblocksysteme (SEB) oder Multiblocksysteme verwendet werden. Derartige Blockcopolymere sind Stand der Technik. Das Säureanhydridgruppen enthaltende Styrol-Ethylen/Butylen-Blockcopolymer wird auf bekannte Weise durch radikalische Umsetzung eines Styrol-Ethylen/Butylen-Blockcopolymers mit einem α,β-ungesättigten Dicarbonsäureanhydrid oder einer Vorstufe hiervon wie z. B. Maleinsäureanhydrid, Maleinsäuremonobutylester, Maleinsäure, Fumarsäure, Aconitsäure, Itaconsäure oder Itaconsäureanhydrid hergestellt. Das Blockcopolymer enthält in der Regel 0,5 bis 6, bevorzugt 1 bis 5 und besonders bevorzugt 2 bis 4 Gew.-% an Einheiten, die vom α,β-ungesättigten Dicarbonsäureanhydrid herrühren.

Das Ethylen-Glycidyl(meth)acrylat-Copolymere enthält üblicherweise im Wesentlichen Einheiten folgender Monomere:
- 20 bis 98 Gew.-%, bevorzugt 30 bis 97 Gew.-% und besonders bevorzugt 40 bis 96 Gew.-% Ethylen sowie
- 2 bis 80 Gew.-%, bevorzugt 3 bis 70 Gew.-% und besonders bevorzugt 4 bis 60 Gew.-% Glycidylacrylat und/oder Glycidylmethacrylat.

Das Ethylen-(Meth)acrylsäureester-Glycidyl(meth)acrylat-Terpolymer enthält üblicherweise im Wesentlichen Einheiten folgender Monomere:
- 20 bis 97,9 Gew.-%, bevorzugt 30 bis 69,9 Gew.-% und besonders bevorzugt 40 bis 95,9 Gew.-% Ethylen,
- 0,1 bis 78 Gew.-%, bevorzugt 1 bis 67 Gew.-% und besonders bevorzugt 2 bis 56 Gew.-% eines Acrylsäureesters und/oder Methacrylsäureesters mit einem C₁- bis C₁₂-Alkohol sowie
- 2 bis 80 Gew.-%, bevorzugt 3 bis 70 Gew.-% und besonders bevorzugt 4 bis 60 Gew.-% Glycidylacrylat und/oder Glycidylmethacrylat,
wobei als Acrylsäureester bzw. Methycrylsäureester beispielsweise folgende Verbindungen eingesetzt werden: Methylacrylat, Ethylacrylat, n-Propylacrylat, n-Butylacrylat, Isobutylacrylat, n-Hexylacrylat, n-Octylacrylat, 2-Ethylhexylacrylat, Isononylacrylat, Dodecylacrylat, Methylmethacrylat, Ethylmethacrylat, N-Propylmethacrylat, n-Butylmethacrylat, Isobutylmethacrylat und/oder 2-Ethylhexylmethacrylat.

Das Ethylen-(Meth)acrylsäureester-α,β-ungesättigtes Carbonsäureanhydrid-Terpolymer enthält üblicherweise im Wesentlichen Einheiten folgender Monomere:
- 20 bis 97,5 Gew.-%, bevorzugt 30 bis 95 Gew.-% und besonders bevorzugt 40 bis 92 Gew.-% Ethylen,
- 2 bis 79,5 Gew.-%, bevorzugt 4 bis 69 Gew.-% und besonders bevorzugt 6 bis 58 Gew.-% eines Acrylsäureesters oder Methacrylsäureesters sowie
- 0,5 bis 6 Gew.-%, bevorzugt 1 bis 5 Gew.-% und besonders bevorzugt 2 bis 4 Gew.-% eines α,β-ungesättigten Carbonsäureanhydrids,
wobei als Acrylsäureester bzw. Methacrylsäureester sowie als α,β-ungesättigtes Carbonsäureanhydrid oder dessen Vorstufe beispielsweise die weiter oben exemplarisch genannten Verbindungen eingesetzt werden können.

Geeignete Polymere der Komponente III sind in erster Linie solche, die mit dem Polyetheramid verträglich sind, beispielsweise ein Polyamid. Bevorzugt wird ein Polyamid eingesetzt, das vom gleichen Typ ist wie die Hartsequenzen des Polyetheramids. Vorteilhafterweise hat das Polyamid eine relative Lösungsviskosität ηᵣₑₗ von mindestens 1,9.

Als geeignete Zusatzstoffe der Komponente IV sind in erster Linie Stabilisatoren, Leitfähigkeitsruß, Flammschutzadditive wie z. B. Melamincyanurat, Pigmente und Verarbeitungshilfsmittel zu nennen. Polymere, die unter die Komponente III fallen, zählen nicht hierzu.

Die Einarbeitung des Copolymeren der Komponente II sowie gegebenenfalls der Zusatzstoffe der Komponenten III und IV erfolgt in der Schmelze unter Scherung, beispielsweise in einem Zweischneckenextruder oder einem Cokneter.

Die erfindungsgemäße Formmasse kann beispielsweise durch Extrusion, konventionelles Blasformen oder 3D-Blasformen, beispielsweise durch Schlauchextrusion in eine geöffnete Formhälfte, 3D-Schlauchmanipulation bzw. 3D-Saugblasformen, durch sequentielles Blasformen zur Herstellung von Hart-Weich-Verbunden oder durch jedes andere Blasformverfahren verarbeitet werden.

Weiterhin kann die Formmasse durch Coextrusion, Coextrusionsblasformen, Coextrusions-3D-Blasformen, Coextrusions-Saugblasformen usw. zu einem Mehrschichtverbund verarbeitet werden.

Darüber hinaus kann die Formmasse im Spritzgießverfahren verarbeitet werden, auch mit Verfahrensvarianten wie GIT (Gasinnendrucktechnik) oder WIT (Wasserinjektionstechnik).

Gemäß den genannten Verfahren können beispielsweise Monorohre oder Mehrschichtrohre hergestellt werden. Diese Rohre können glatt oder in Teilbereichen bzw. vollständig gewellt sein. Darüber hinaus findet die Formmasse Verwendung zur Herstellung von Profilen jeglicher Art, beispielsweise Dichtprofilen, oder Hohlkörpern wie z. B. Behältern.

Die erfindungsgemäß hergestellten Formteile werden beispielsweise im Kraftfahrzeugbau, im Maschinen- und Apparatebau oder in der Medizintechnik eingesetzt, insbesondere als eine Unterdruckleitung etwa für Bremskraftverstärker, eine Luftführungsleitung, ein Druckschlauch, beispielsweise eine Druckluftleitung, eine Steuerleitung, eine Kühlmittelleitung, eine Kraftstoffleitung, eine Entlüftungsleitung, eine Scheibenwaschanlagenleitung, eine Leitung für hydraulische Kupplungssysteme, eine Servolenkungsleitung, eine Leitung für Klimaanlagen von Kraftfahrzeugen, eine Kabel- oder Adernummantelung, eine Leitung für den Bereich Maschinen- und Apparatebau oder in der Medizintechnik oder als spritzgegossenes Teil eines Ölfilters oder eines Kraftstofffilters. Diese Formteile sind ebenfalls Gegenstand der Erfindung.

Die Erfindung ist im Folgenden beispielhaft erläutert.

### Herstellung des Polyetheramids:

Ein 200 1-Rührautoklav wurde mit folgenden Einsatzstoffen beschickt:

| | |
|---|---|
| 26,11 kg | Hexamethylendiamin als 75%ige wässrige Lösung, |
| 52,94 kg | 1.12-Dodecandisäure, |
| 25,55 kg | JEFFAMIN^{Ⓡ} D400 sowie |
| 100 g | einer 50%igen wässrigen Lösung von Hypophosphoriger Säure. |

Die Einsatzstoffe wurden in einer Stickstoffatmosphäre aufgeschmolzen und unter Rühren im geschlossenen Autoklaven auf ca. 220 °C erhitzt, wobei sich ein Innendruck von ca. 20 bar einstellte. Dieser Innendruck wurde 2 Stunden beibehalten; danach wurde die Schmelze unter kontinuierlichem Entspannen auf Normaldruck weiter auf 230 °C aufgeheizt und danach 1,5 Stunden im Stickstoffstrom bei dieser Temperatur gehalten. Anschließend wurde innerhalb von 3 Stunden bis auf 28 mbar evakuiert und weitere 3 Stunden bei diesem Vakuum gehalten, bis anhand des Drehmoments kein weiterer Anstieg der Schmelzeviskosität mehr angezeigt wurde. Danach wurde die Schmelze mittels Zahnradpumpe ausgetragen und als Strang granuliert. Das Granulat wurde 24 Stunden unter Stickstoff bei 80 °C getrocknet.

Das Produkt wies folgende Kennwerte auf:

| | |
|---|---|
| Kristallitschmelzpunkt Tₘ: | 193 °C |
| Relative Lösungsviskosität ηᵣₑₗ: | 1,91 |
| COOH-Endgruppen: | 21 mmol/kg |
| Aminoendgruppen: | 26 mmol/kg |

Aus dem Verhältnis der eingesetzten Monomeren ergibt sich in diesem Polyetheramid formal ein PA612-Block mit einer mittleren Molmasse von 1083.

50 kg dieses Granulats wurden 24 Stunden bei 175 °C Manteltemperatur unter Stickstoff (250 1/h) in einem 250 1 fassenden Taumeltrockner nachkondensiert. Nach dieser Zeit wies das Produkt folgende Kennwerte auf:

| | |
|---|---|
| Kristallitschmelzpunkt Tₘ: | 193 °C |
| Relative Lösungsviskosität ηᵣₑₗ: | 2,06 |
| COOH-Endgruppen: | 14 mmol/kg |
| Aminoendgruppen: | 20 mmol/kg |

### Herstellung der Formmassen:

Die Rezeptur der Formmassen in Gew.-Teilen ist nachfolgend wiedergegeben. Die Einarbeitung der einzelnen Rezepturbestandteile erfolgte auf einem Zweischneckenextruder der Firma Werner & Pfleiderer bei einer Zylindertemperatur von 250 °C.

**Tabelle 1: Beispiele**

| Bestandteil | | Referenz 1 | Referenz 2 | 1 | 2 | 3 | 4 | 5 |
|---|---|---|---|---|---|---|---|---|
| Polyetheramid | | 97,25 | 94,25 | 92,25 | 87,25 | 82,25 | 92,25 | 82,25 |
| PA612, Überschuss an Aminoendgruppen; ηᵣₑₗ = 2,25 | | - | - | - | 5,0 | 10,0 | - | 10,0 |
| EXXELOR^{®} VA 1803 (gemäß Produktbroschüre ein EPM-Kautschuk mit ca. 0,7 Gew.-% aufgepfropftem Maleinsäureanhydrid) | | - | 3,0 | 5,0 | 5,0 | 5,0 | - | - |
| Ethylen-Acrylsäureester-Glycidylmethacrylat-Terpolymer, 60/32/8 Gew.-Teile | | - | - | - | - | - | 5,0 | 5,0 |
| aminischer Hitzestabilisator | | 0,50 | 0,50 | 0,50 | 0,50 | 0,50 | 0,50 | 0,50 |
| Stabilisatorbatch auf Jodidbasis | | 1,00 | 1,00 | 1,00 | 1,00 | 1,00 | 1,00 | 1,00 |
| Farbgranulat schwarz | | 1,25 | 1,25 | 1,25 | 1,25 | 1,25 | 1,25 | 1,25 |
| Ceasit PC (Calciumstearat; äußerlich) | | 0,04 | 0,04 | 0,04 | 0,04 | 0,04 | 0,04 | 0,04 |
| Kerbschlagzähigkeit nach ISO 179/1eA [KJ/m²] | bei 23 °C | 41 | 81 | 113 | 118 | 120 | 109 | 115 |
| | bei-40°C | 3,1 | 4,9 | 6,5 | 7,5 | 7,8 | 4,9 | 5,9 |
| Zug-E-Modul nach ISO 527 [MPa] | | 550 | 510 | 490 | 520 | 550 | 480 | 570 |

Man erkennt, dass man eine deutlich verbesserte Kerbschlagzähigkeit sowohl bei Raumtemperatur als auch bei -40 °C erhält, wenn man den durch den Kautschukzusatz bedingten Abfall des E-Moduls durch gleichzeitigen Zusatz an Polyamid kompensiert. Durch das Mischungsverhältnis der Komponenten kann der E-Modul gezielt eingestellt werden.

Die Schmelzviskosität der gemäß Beispiel 1 bis 6 erhaltenen Formmassen war gegenüber derjenigen der Referenzformmasse erhöht, gleichzeitig wiesen sie eine höhere Strukturviskosität (Steigerung der Schmelzviskositätskurve in Abhängigkeit von der Scherung) auf, was sie insbesondere für Extrusions- oder Blasformanwendungen geeignet macht.

## Patentansprüche

1. Verwendung einer Formmasse, die folgende Komponenten enthält:
I. weniger als 95 bis 80 Gew.-Teile eines Polyetheramids auf Basis eines linearen aliphatischen Diamins mit 6 bis 14 C-Atomen, einer linearen aliphatischen oder aromatischen Dicarbonsäure mit 6 bis 14 C-Atomen und eines Polyetherdiamins mit wenigstens 3 C-Atomen pro Ethersauerstoff und primären Aminogruppen an den Kettenenden,
II. mehr als 5 bis 20 Gew.-Teile eines funktionelle Gruppen enthaltenden Kautschuks,
wobei die Summe der Gew.-Teile von I. und II. 100 ergibt und wobei das Polyetheramid der Komponente I einen Kristallitschmelzpunkt Tₘ gemäß ISO 11357 von mindestens 175 °C, eine relative Lösungsviskosität ηᵣₑₗ, gemessen in einer 0,5 gew.-%igen Lösung in m-Kresol bei 23 °C gemäß ISO 307 von 1,80 sowie eine Ruhe-Scherviskosität bei 220 °C, gemessen in einem mechanischen Spektrometer (Kegel-Platte) nach ASTM D 4440, von mindestens 500 Pas besitzt,
zur Herstellung eines Formteils, das ausgewählt ist aus der Gruppe Unterdruckleitung für Bremskraftverstärker, Luftführungsleitung, Druckluftleitung, Steuerleitung, Kühlmittelleitung, Kraftstoffleitung, Entlüftungsleitung, Scheibenwaschanlagenleitung, Leitung für hydraulische Kupplungssysteme, Servolenkungsleitung, Leitung für Klimaanlagen von Kraftfahrzeugen, Kabel- oder Adernummantelung und spritzgegossenes Teil eines Ölfilters oder Kraftstofffilters.

2. Verwendung gemäß Anspruch 1,
**dadurch gekennzeichnet,**
**dass** die Komponente gemäß I. zu mindestens 85 Gew.-Teilen und die Komponente gemäß II. zu maximal 15 Gew.-Teilen enthalten ist.

3. Verwendung gemäß einem der vorhergehenden Ansprüche,
**dadurch gekennzeichnet,**
**dass** die relative Lösungsviskosität ηᵣₑₗ des Polyetheramids mindestens 1,85 beträgt.

4. Verwendung gemäß einem der vorhergehenden Ansprüche,
**dadurch gekennzeichnet,**
**dass** die Ruhe-Scherviskosität des Polyetheramids bei 220 °C mindestens 800 Pas beträgt.

5. Verwendung gemäß einem der vorhergehenden Ansprüche,
**dadurch gekennzeichnet,**
**dass** das zur Herstellung des Polyetheramids verwendete Polyetherdiamin eine zahlenmittlere Molmasse von 230 bis 4000 besitzt.

6. Verwendung gemäß einem der vorhergehenden Ansprüche,
**dadurch gekennzeichnet,**
**dass** der von Polyetherdiamin herrührende Anteil des Polyetheramids 5 bis 50 Gew.-% beträgt.

7. Verwendung gemäß einem der vorhergehenden Ansprüche,
**dadurch gekennzeichnet,**
**dass** die Ruhe-Scherviskosität der Formmasse bei 220 °C mindestens 2000 Pas beträgt.

8. Verwendung gemäß Anspruch 7,
**dadurch gekennzeichnet,**
**dass** die Ruhe-Scherviskosität der Formmasse bei 220 °C mindestens 5000 Pas beträgt.

9. Verwendung gemäß einem der vorhergehenden Ansprüche,
**dadurch gekennzeichnet,**
**dass** die Formmasse maximal 50 Gew.-% an weiteren Polymeren enthält.

10. Verwendung gemäß einem der vorhergehenden Ansprüche,
**dadurch gekennzeichnet,**
**dass** die Formmasse maximal 10 Gew.-% an üblichen Zusatzstoffen enthält.

11. Verwendung gemäß einem der vorhergehenden Ansprüche,
**dadurch gekennzeichnet,**
**dass** die Komponente gemäß II. ausgewählt ist aus der Gruppe
- Säureanhydridgruppen enthaltende Ethylen-α-Olefin-Copolymere,
- Säureanhydridgruppen enthaltende Styrol-Ethylen/Butylen-Blockcopolymere,
- Ethylen-Glycidyl(meth)acrylat-Copolymere,
- Ethylen-(Meth)acrylsäureester-Glycidyl(meth)acrylat-Terpolymere und/oder
- Ethylen-(Meth)acrylsäureester-α,β-ungesättiges Carbonsäureanhydrid-Terpolymere.

12. Formteil, hergestellt unter Verwendung einer Formmasse, die folgende Komponenten enthält:
I. weniger als 95 bis 80 Gew.-Teile eines Polyetheramids auf Basis eines linearen aliphatischen Diamins mit 6 bis 14 C-Atomen, einer linearen aliphatischen oder aromatischen Dicarbonsäure mit 6 bis 14 C-Atomen und eines Polyetherdiamins mit wenigstens 3 C-Atomen pro Ethersauerstoff und primären Aminogruppen an den Kettenenden,
II. mehr als 5 bis 20 Gew.-Teile eines funktionelle Gruppen enthaltenden Kautschuks, wobei die Summe der Gew.-Teile von I. und II. 100 ergibt und wobei das Polyetheramid der Komponente I einen Kristallitschmelzpunkt Tₘ gemäß ISO 11357 von mindestens 175 °C, eine relative Lösungsviskosität ηᵣₑₗ, gemessen in einer 0,5 gew.-%igen Lösung in m-Kresol bei 23 °C gemäß ISO 307 von 1,80 sowie eine Ruhe-Scherviskosität bei 220 °C, gemessen in einem mechanischen Spektrometer (Kegel-Platte) nach ASTM D 4440, von mindestens 500 Pas besitzt,
**dadurch gekennzeichnet,**
**dass** es eine Unterdruckleitung für Bremskraftverstärker, eine Luftführungsleitung, eine Druckluftleitung, eine Steuerleitung, eine Kühlmittelleitung, eine Kraftstoffleitung, eine Entlüftungsleitung, eine Scheibenwaschanlagenleitung, eine Leitung für hydraulische Kupplungssysteme, eine Servolenkungsleitung, eine Leitung für Klimaanlagen von Kraftfahrzeugen, eine Kabel- oder Adernummantelung oder ein spritzgegossenes Teil eines Ölfilters oder Kraftstofffilters ist.

## Claims

1. Use of a molding composition which comprises the following components:
I. less than 95 to 80 parts by weight of a polyetheramide based on a liner aliphatic diamine having from 6 to 14 carbon atoms, on a linear aliphatic or aromatic dicarboxylic acid having from 6 to 14 carbon atoms, and on a polyetherdiamine which has at least 3 carbon atoms per ether oxygen and has primary amino groups at the chain ends,
II. more than 5 to 20 parts by weight of a rubber containing functional groups,
where the total of the parts by weight of I. and II. is 100 and where the polyetheramide of component I has a crystallite melting point Tₘ in accordance with ISO 11357 of at least 175°C, a relative solution viscosity **η**ᵣₑₗ, measured in 0.5% by weight solution in m-cresol at 23°C in accordance with ISO 307, of 1.80 and also a zero-shear viscosity at 220°C, measured in a mechanical spectrometer (cone and plate) in accordance with ASTM D4440, of at least 500 Pas,
for producing a molding selected from the group consisting of subatmospheric-pressure line for brake servos, air line, pressure hose, control line, coolant line, fuel line, ventilation line, windshield-wash system line, line for hydraulic coupling systems, servo control line, line for air-conditioning systems of motor vehicles, cable sheath or wire sheath and injection-molded part of an oil filter or fuel filter.

2. Use according to Claim 1,
**characterized in that**
the amount present of component I. is at least 85 parts by weight, and the amount present of component II. is at most 15 parts by weight.

3. Use according to either of the preceding claims,
**characterized in that**
the relative solution viscosity **η**ᵣₑₗ of the polyetheramide is at least 1.85.

4. Use according to any of the preceding claims,
**characterized in that**
the zero-shear viscosity of the polyetheramide at 220°C is at least 800 Pas.

5. Use according to any of the preceding claims,
**characterized in that**
the polyetherdiamine used to prepare the polyetheramide has a number-average molecular weight of from 230 to 4 000.

6. Use according to any of the preceding claims,
**characterized in that**
that fraction of the polyetheramide which derives from the polyetherdiamine is from 5 to 50% by weight.

7. Use according to any of the preceding claims,
**characterized in that**
the zero-shear viscosity of the molding composition at 220°C is at least 2 000 Pas.

8. Use according to Claim 7,
**characterized in that**
the zero-shear viscosity of the molding composition at 220°C is at least 5 000 Pas.

9. Use according to any of the preceding claims,
**characterized in that**
the molding composition comprises at most 50% by weight of other polymers.

10. Use according to any of the preceding claims,
**characterized in that**
the molding composition comprises at most 10% by weight of conventional additives.

11. Use according to any of the preceding claims,
**characterized in that**
component II. has been selected from the group
- ethylene-α-olefin copolymers containing anhydride groups,
- styrene-ethylene/butylene block copolymers containing anhydride groups,
- ethylene-glycidyl (meth)acrylate copolymers,
- ethylene-(meth)acrylate-glycidyl (meth)acrylate terpolymers, and/or
- ethylene-(meth)acrylate-α,β-unsaturated carboxylic anhydride terpolymers.

12. Molding produced using a molding composition which comprises the following components:
I. less than 95 to 80 parts by weight of a polyetheramide based on a liner aliphatic diamine having from 6 to 14 carbon atoms, on a linear aliphatic or aromatic dicarboxylic acid having from 6 to 14 carbon atoms, and on a polyetherdiamine which has at least 3 carbon atoms per ether oxygen and has primary amino groups at the chain ends,
II. more than 5 to 20 parts by weight of a rubber containing functional groups,
where the total of the parts by weight of I. and II. is 100 and where the polyetheramide of component I has a crystallite melting point Tₘ in accordance with ISO 11357 of at least 175°C, a relative solution viscosity ηᵣₑₗ, measured in 0.5% by weight solution in m-cresol at 23°C in accordance with ISO 307, of 1.80 and also a zero-shear viscosity at 220°C, measured in a mechanical spectrometer (cone and plate) in accordance with ASTM D4440, of at least 500 Pas,
**characterized in that**
it is a subatmospheric-pressure line for brake servos, an air line, a compressed air line, a control line, a coolant line, a fuel line, a ventilation line, a windshield-wash-system line, a line for hydraulic coupling systems, a servo control line, a line for air-conditioning systems of motor vehicles, a cable sheath or wire sheath or an injection-molded part of an oil filter or fuel filter.

## Revendications

1. Utilisation d'une matière à mouler qui contient les composants suivants :
I. moins de 95 à 80 parties en poids d'un polyétheramide à base d'une diamine aliphatique linéaire ayant de 6 à 14 atomes de carbone, d'un acide dicarboxylique aliphatique linéaire ou aromatique ayant de 6 à 14 atomes de carbone et d'une polyétherdiamine comportant au moins 3 atomes de carbone par atome d'oxygène en fonction éther et des groupes amino primaires aux extrémités de chaîne,
II. plus de 5 à 20 parties en poids d'un caoutchouc contenant des groupes fonctionnels,
la somme des parties en poids de I. et II. étant égale à 100 et le polyétheramide du composant I présentant un point de fusion de cristallites Tₘ selon ISO 11357 d'au moins 175 °C, une viscosité relative en solution ηᵣₑₗ, mesurée dans une solution à 0,5 % en poids dans du m-crésol à 23 °C selon ISO 307, de 1,80 ainsi qu'une viscosité à cisaillement nul à 220 °C, mesurée dans un spectromètre mécanique (cône-plateau) selon ASTM D 4440, d'au moins 500 Pa.s,
pour la fabrication d'une pièce moulée qui est choisie dans le groupe constitué par une conduite de dépression pour servofrein, une conduite d'admission d'air, une conduite d'air comprimé, une conduite de commande, une conduite de fluide de refroidissement, une conduite d'alimentation en carburant, une conduite de récupération des gaz, une conduite de gicleur lave-glace, une conduite pour systèmes d'embrayage hydrauliques, une conduite de direction assistée, une conduite de climatisations de véhicules automobiles, une gaine de câble ou de fil conducteur et la partie moulée par injection d'un filtre à huile ou d'un filtre à carburant.

2. Utilisation selon la revendication 1, **Caractérisée en ce que**
Le composant selon I. est contenu à raison d'au moins 85 parties en poids et le composant selon II. est contenu à raison d'au maximum 15 parties en poids.

3. Utilisation selon l'une quelconque des revendications précédentes,
**caractérisée en ce que**
la viscosité relative en solution ηᵣₑₗ du polyétheramide est d'au moins 1,85.

4. Utilisation selon l'une quelconque des revendications précédentes,
**caractérisée en ce que**
la viscosité à cisaillement nul du polyétheramide à 220 °C est d'au moins 800 Pa.s.

5. Utilisation selon l'une quelconque des revendications précédentes,
**caractérisée en ce que**
la polyétherdiamine utilisée pour la préparation du polyétheramide présente une masse molaire moyenne en nombre de 230 à 4 000.

6. Utilisation selon l'une quelconque des revendications précédentes,
**caractérisée en ce que**
la fraction du polyétheramide qui provient de la polyétherdiamine vaut de 5 à 50 % en poids.

7. Utilisation selon l'une quelconque des revendications précédentes,
**caractérisée en ce que**
la viscosité à cisaillement nul à 220 °C de la matière à mouler est d'au moins 2 000 Pa.s.

8. Utilisation selon la revendication 7,
**caractérisée en ce que**
la viscosité à cisaillement nul à 220 °C de la matière à mouler est d'au moins 5 000 Pa.s.

9. Utilisation selon l'une quelconque des revendications précédentes,
**caractérisée en ce que**
la matière à mouler contient au maximum 50 % en poids d'autres polymères.

10. Utilisation selon l'une quelconque des revendications précédentes,
**caractérisée en ce que**
la matière à mouler contient au maximum 10 % en poids d'additifs usuels.

11. Utilisation selon l'une quelconque des revendications précédentes,
**caractérisée en ce que**
le composant selon II. est choisi dans le groupe constitué par
- des copolymères éthylène-α-oléfine contenant des groupes anhydride d'acide,
- des copolymères séquencés styrène-éthylène/ butylène contenant des groupes anhydride d'acide,
- des copolymères éthylène-(méth)acrylate de glycidyle,
- des terpolymères éthylène-ester d'acide (méth)acrylique-(méth)acrylate de glycidyle et/ou
- des terpolymères éthylène-ester d'acide (méth)acrylique-anhydride d'acide carboxylique α,ß-insaturé.

12. Pièce moulée, fabriquée avec utilisation d'une matière à mouler qui contient les composants suivants :
I. moins de 95 à 80 parties en poids d'un polyétheramide à base d'une diamine aliphatique linéaire ayant de 6 à 14 atomes de carbone, d'un acide dicarboxylique aliphatique linéaire ou aromatique ayant de 6 à 14 atomes de carbone et d'une polyétherdiamine comportant au moins 3 atomes de carbone par atome d'oxygène en fonction éther et des groupes amino primaires aux extrémités de chaîne,
II. plus de 5 à 20 parties en poids d'un caoutchouc contenant des groupes fonctionnels,
la somme des parties en poids de I. et II. étant égale à 100 et le polyétheramide du composant I présentant un point de fusion de cristallites Tₘ selon ISO 11357 d'au moins 175 °C, une viscosité relative en solution ηᵣₑₗ, mesurée dans une solution à 0,5 % en poids dans du m-crésol à 23 °C selon ISO 307, de 1,80 ainsi qu'une viscosité à cisaillement nul à 220 °C, mesurée dans un spectromètre mécanique (cône-plateau) selon ASTM D 4440, d'au moins 500 Pa.s,
**caractérisée en ce**
**qu'**elle est une conduite de dépression pour servofrein, une conduite d'admission d'air, une conduite d'air comprimé, une conduite de commande, une conduite de fluide de refroidissement, une conduite d'alimentation en carburant, une conduite de récupération des gaz, une conduite de gicleur lave-glace, une conduite pour systèmes d'embrayage hydrauliques, une conduite de direction assistée, une conduite de climatisations de véhicules automobiles, une gaine de câble ou de fil conducteur et la partie moulée par injection d'un filtre à huile ou d'un filtre à carburant.
